# EUROPEAN PATENT SPECIFICATION

(11) **EP 4 393 291 B1**
(45) Date of publication and mention of the grant of the patent: **02.12.2026**
(21) Application number: 23220329.9
(22) Date of filing: 27.12.2023
(51) Int. Cl.: A01D 34/74, A01D 34/64, A01D 101/00

(54) **HOOKING DEVICE**
EINHÄNGEVORRICHTUNG
DISPOSITIF D'ACCROCHAGE

(30) Priority: 27.12.2022 IT 202200026892
(43) Date of publication of application: 03.07.2024
(73) Proprietor: Stiga S.p.A. in breve anche St. S.p.A., 31033 Castelfranco Veneto (TV) (IT)
(72) Inventor: FIOR, Roberto, 31033 Castelfranco Veneto (TV) (IT)
(74) Representative: PGA S.p.A.

(56) References cited:
- EP-A1- 2 989 880
- WO-A2-2011/136666
- US-A1- 2015 181 803
- US-A1- 2020 068 801
- US-B2- 10 660 269
- US-B2- 10 779 467
- US-B2- 11 212 952

## Description

### Field of the invention

The present invention relates to a coupling device configured to operate a connection, in particular releasable, between a first body and a second body. In an embodiment, the device according to the present invention is configured to be applied to an agricultural vehicle or an agricultural accessory, in particular a lawnmower tractor, so as to be able to quickly connect an accessory, in particular a cutting plate. The present invention therefore relates to a system comprising a first body and a second body, the first body being provided with a coupling device. Furthermore, the present invention relates to a method for operating a connection between a first body and a second body by means of a coupling device and a method for operating a disconnection between a first body and a second body connected to each other by means of a coupling device.

### Background of the invention

In the field of agriculture and gardening, various configurations are known for connecting a cutting plate or an external accessory to a vehicle, for example a lawnmower tractor, with a certain stability. The most common configurations of coupling devices are mentioned herein.

A first configuration includes the use of hooks, whereby the plate is lowered vertically (this solution has several drawbacks, such as the lack of practicality given the weight, the imperfect stability of the plate and the need to stop the tractor). A second configuration includes the use of chains and hooks (this solution has several drawbacks, such as the lack of practicality given the number of operations required). A third configuration includes bolting between components (this solution also has the drawback of impracticality and the high number of operations required). A fourth configuration includes the use of brackets, inserts and pins (this solution is impractical given the number of elements involved and the number of operations required).

US6,293,077B1 discloses a device, not of the quick type, for coupling a cutting plate, which consists alternatively of a hole and a cavity functioning as a hook. The device disclosed in this document has some critical issues such as the complexity and the number of operations necessary for the coupling. US11,212,952B2 discloses a device, not of the quick type, for coupling a cutting plate, which consists of a hole, a hook and various connector elements. The device described in this document has critical issues, such as a large number of elements going to form the system and the complexity of the system disclosed, which translates into constant maintenance and a large number of steps for receiving the accessory.

US2015/0040529A1 discloses a device, not of the quick type, for fixing an accessory to a tractor by means of a bracket and some pulleys. The device disclosed in this document has critical issues, such as the high complexity of the system which implies a greater risk of faults and thus lower reliability.

EP2989880B1 discloses a device, not of the quick type, for fixing a cutting plate to the frame of a tractor by means of the use of brackets and pins. The device disclosed in this document has critical issues, for example the complexity of the coupling system, the high number of elements composing it and the significant risk of wear and breakage of the components of such a system.

### Objectives of the Invention

The present invention has the objective of providing a quick coupling device for a vehicle (for example an agricultural vehicle) or for an accessory which allows to overcome the drawbacks encountered in relation to the state of the art described above.

Furthermore, the present invention has the objective of providing a device which allows to execute a coupling operation and a release operation of an external element more quickly and more simply with respect to the devices present in the prior art.

Furthermore, the present invention has the objective of providing a device which allows to execute a coupling operation and a release operation of an external element with a smaller number of operations with respect to the devices present in the prior art.

Furthermore, the present invention has the objective of providing a device which allows to execute a coupling operation and a release operation of an external element, which are simpler to carry out. Furthermore, the present invention has the objective of providing a system which allows to execute a coupling operation and a release operation of an external element more quickly and more simply with respect to the system present in the prior art.

Furthermore, the present invention has the objective of providing a system which allows to execute a coupling operation and a release operation of an external element with a smaller number of operations with respect to the systems present in the prior art.

### Summary of the invention

The above objects are achieved, together with further advantageous effects, by a coupling device according to claim 1 and a method for operating a connection according to claim 12. Preferred embodiments are provided in the dependent claims.

### Description of the drawings

Embodiments of the present invention will be described in detail below, by way of non-limiting explanation, with reference to the accompanying drawing tables, in which:
- figure 1 depicts an assembly between a lawnmower tractor and a front cutting plate by means of a plurality of coupling devices according to the present invention;
- figures 2, 3 and 4 respectively depict a front view, a plan view and an axonometric view of a detail of the assembly of figure 1;
- figure 5 is an axonometric view of an embodiment of a coupling device according to the present invention;
- figures 6 and 7 depict the coupling device of figure 5 according to the present invention in distinct operating conditions and
- figures 8 and 9 depict a possible variant of a coupling device according to the present invention.

In the accompanying drawing tables, the same parts are indicated with the same numerical references. Such numerical references are the same that will be used in the following detailed description and thus in the claims. It should be noted that the figures illustrate the subject matter of the invention by representations not to scale.

### Features of the coupling device according to the invention

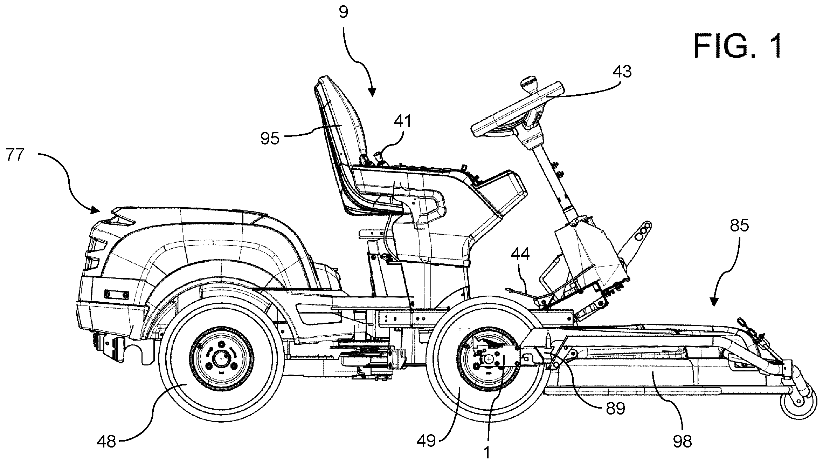

Figure 1 shows a system 9 comprising a lawnmower tractor 77 and a cutting plate 85 connected to each other by means of a pair of coupling devices 1 according to the present invention. It should be noted that only one coupling device 1 is visible in figure 1, the further coupling device 1 being in particular located in a specular position with respect to the plane of symmetry of the lawnmower tractor 77. It should further be noted that neither the number nor the distribution of the coupling devices 1 are to be interpreted as limiting features of the present invention, the number of coupling devices 1 being equal to one or greater than two, in particular equal to three or equal to four or equal to five.

In the example of figure 1, the cutting plate 85 is of the front type, i.e., of the type whereby the cutting plate 85 precedes the lawnmower tractor 77 along the advancement direction. The cutting plate 85 comprises a body 98 inside which a plurality of rotating blades, in particular three rotating blades, are housed. The lawnmower tractor 77 in Figure 1 is a manually driven vehicle, but the present invention is not to be construed as limited thereto. The lawnmower tractor 77 comprises a seat 95, guide means, such as in particular a steering wheel 43, a pedal 44 and a control panel 41, a pair of front wheels 49, a pair of rear wheels 48 and propulsion means operatively connected to the front wheels 49 and/or to the rear wheels 48. The lawnmower tractor 77 can be propelled by a petrol engine or by an electric motor, in such a second case exploiting the electric charge stored in rechargeable batteries housed on board the lawnmower tractor 77.

Each of the coupling devices 1 is configured to allow a releasable-type connection between the lawnmower tractor 77 and the cutting plate 85. In particular, each of the coupling devices 1 is operatively interposed between an arm 89 of the cutting plate 85 and a stationary shaft 54 of the lawnmower tractor 77, such a stationary shaft 54 being substantially coaxial to the axle of the front wheels of the lawnmower tractor 77. More in detail, each of the coupling devices 1 is mounted to an arm 89 of the cutting plate 85 by means of screws and/or mechanical interlocking and is releasably constrained to a stationary shaft 54 of the lawnmower tractor 77.

Although the application of the present invention for the purposes of a connection between a lawnmower tractor 77 and a cutting plate 85 of the front type should be considered a particularly advantageous application, alternative applications of the present invention are possible and are equally advantageous. For example, the coupling device 1 can operate a releasable-type connection between a vehicle, in particular a vehicle for gardening and/or agriculture and/or construction, for example a tractor or a thresher or an excavator or an operating machine or a vehicle, and an accessory for such a vehicle, in particular a cutting plate or a snow plough blade or a blower or a spreader or a plough or a milling machine or a collection device.

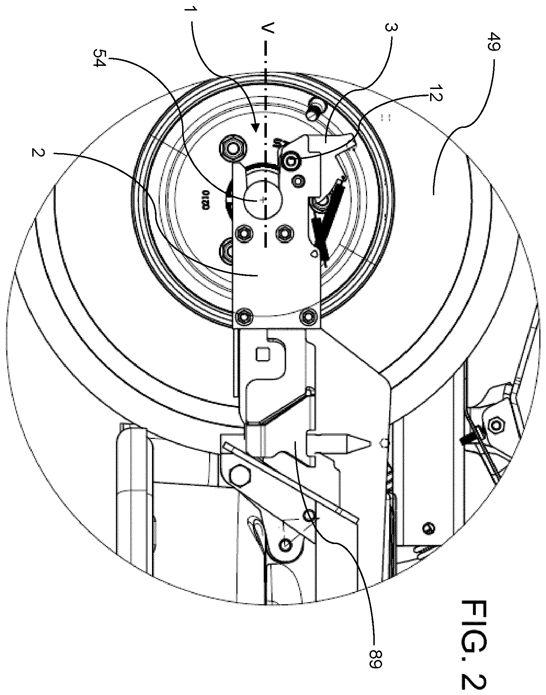

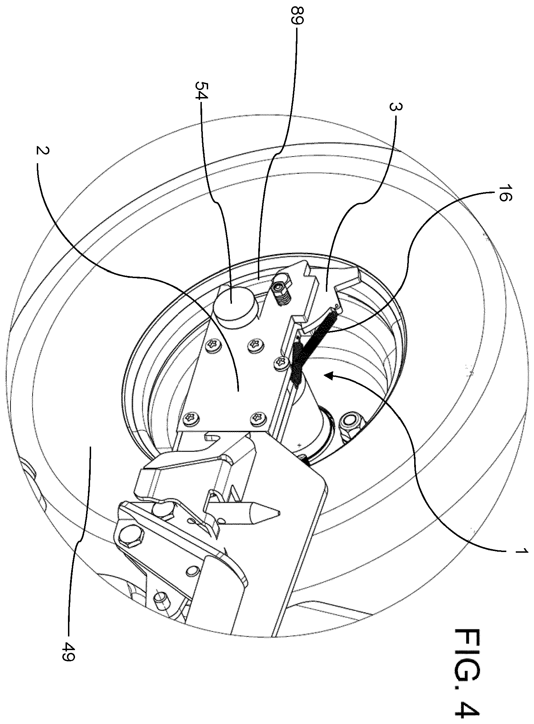

Figures 2 to 4 are detailed views of the system 9 according to the present invention, in which special visibility is given to the coupling device 1. It should be noted that, in each of Figures 2 to 4, the coupling device 1, in order to operate a releasable connection between the lawnmower tractor 77 and the cutting plate 85, exhibits a first element 2 and a second element 3 which are relatively movable with each other, in particular relatively movable by rotation, and which will be described in detail below. In Figure 2 it can be seen in particular that the coupling device 1 advantageously has an orientation parallel to the ground on which the lawnmower tractor 77 rests.

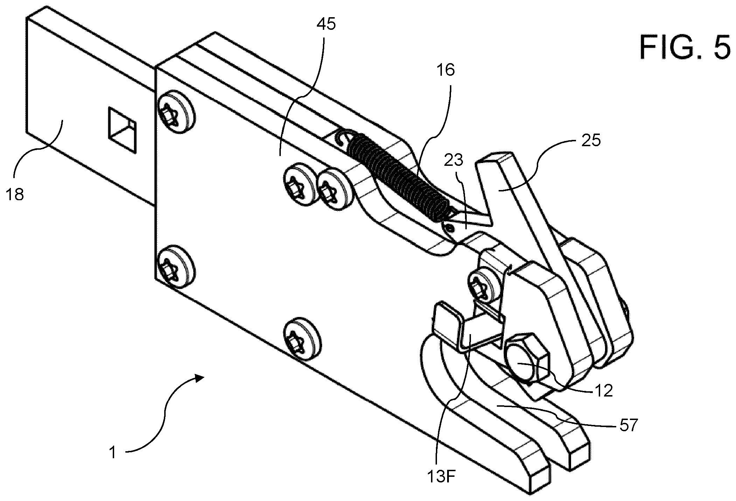

Figures 5 to 7 show a first embodiment of a coupling device 1 according to the present invention, configured to operate a releasable-type connection between a first body and a second body. To this end, the coupling device 1 can comprise a mounting portion 18 to allow the assembly thereof to an element of the first body (for example to the cutting plate 85 of Figure 1) and can further comprise a cavity 5 for stably and selectively housing an element 4 belonging to the second body (for example to the lawnmower tractor 77 of Figure 1).

The coupling device 1 comprises a first element 2, which can be applied (for example by means of the mounting portion 18) to the first body. Alternatively, the coupling device 1 can be obtained in a single piece with an element of the first body. The coupling device 1 further comprises a second element 3 integrally movable with respect to the first element 2 or having at least one movable portion with respect to a portion of the first element 2. Advantageously, the at least one movable portion of the second element 3 (hereinafter referred to as operating portion 28) has, with respect to the portion of the first element 2 (hereinafter referred to as connection portion 29), a rotational degree of freedom, this in no way precluding that, according to the present invention, such a degree of freedom can alternatively be a translational or rototranslational degree of freedom.

In particular, the rotational degree of freedom of the second element 3 with respect to the first element 2 is obtained by means of a pin 12 which in particular makes a hinge connection and which, in Figures 5 to 7, is depicted as a component of the coupling device 1 which is distinct from both the first element 2 and the second element 3, being housed in respective seats of the first element 2 and the second element 3. However, the pin 12 can alternatively be a component of the coupling device 1 integrated with the first element 2 or with the second element 3.

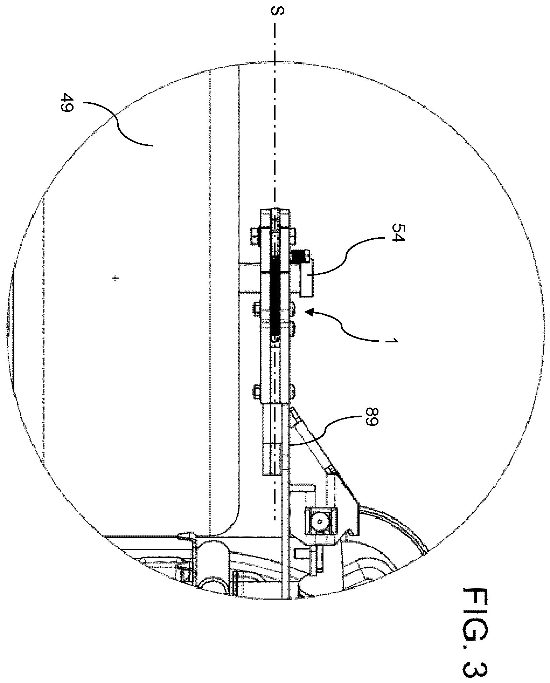

The first element 2 and the second element 3 can both be made of metallic material, in particular of steel. According to a possible embodiment, a preponderant fraction of the extension of the second element 3 is housed in a seat 57 obtained in the first element 2. This can especially be appreciated in Figure 5, from which it is further evident that the first element 2 and the second element 3 both have an ideally symmetrical shape (the common plane of ideal symmetry S for the first element 2 and for the second element 3 is depicted in Figure 3). The first element 2 can be made by assembling three plate components, i.e., by assembling a central plate component defining the seat 57 for housing the second element 3 with two side plate components mirroring each other.

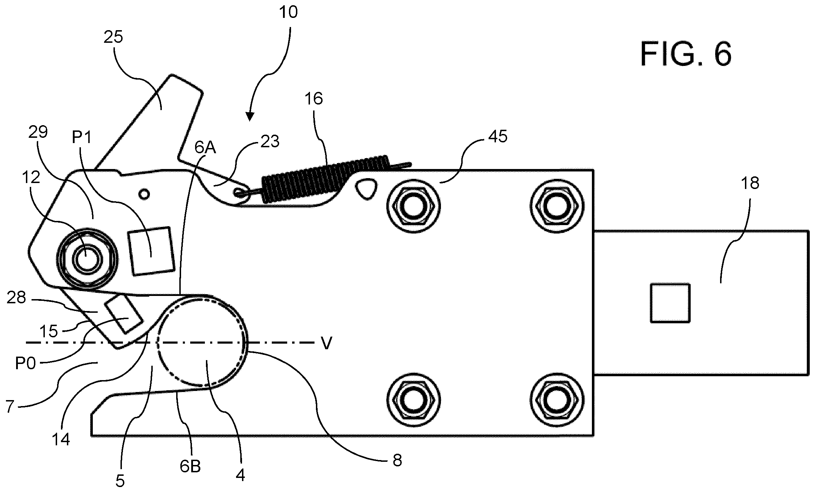

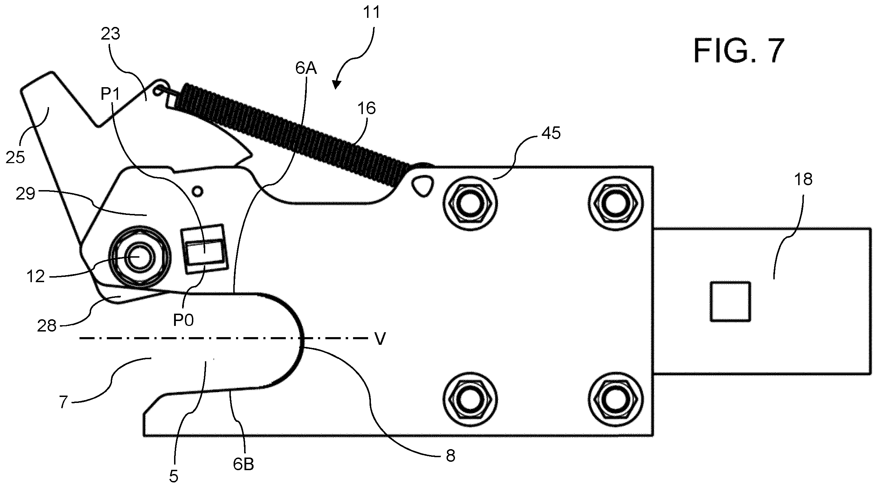

The first element 2 comprises a connection portion 29, in which a cavity 5 is obtained. More in detail, the cavity 5 extends in the connection portion 29 starting from an inlet section 7, the penetration of the cavity 5 in the first element 2 occurring along an extension axis V. As can be seen from Figures 6 and 7, the extension axis V is advantageously substantially rectilinear. However, this does not preclude that, in alternative embodiments of the present invention, the extension axis V of the cavity 5 can be non-rectilinear and can be represented by an entirely or partially curvilinear extension trajectory. The inlet section 7 exhibits a given width. Advantageously, the cavity 5 is defined by an end wall 8 (in particular opposite the inlet section 7) and by two opposite walls 6A and 6B (each extending between the end wall 8 and the inlet section 7, the end wall 8 preferably extending seamlessly between the opposite walls 6A and 6B). The end wall 8 of the cavity 5 can be integrally curved or can comprise at least one curved section, in particular at least one circumferential arc section. Alternatively, the end wall 8 of the cavity 5 can have a flat wall or a wall characterised by a polygonal profile.

In the depiction of Figures 5 to 7, the opposite walls 6A and 6B extend for a different length from each other, so that the inlet section 7 is transverse to the extension axis V. However, the present invention does not preclude that the opposite walls 6A and 6B can have a substantially identical length, so that the inlet section 7 is orthogonal to the extension axis V. Also in the depiction of Figures 5 to 7, the cavity 5 exhibits a convergent trend, since the distance between the opposite walls 6A and 6B adjacent to the inlet section 7 is greater than the distance between the opposite walls 6A and 6B adjacent to the end wall 8. However, the present invention does not preclude that the opposite walls 6A and 6B can both be substantially parallel to the extension axis V.

As can be seen in Figure 6, the cavity 5 is configured to selectively obtain a stable housing of an element 4 belonging to the second body (i.e., to a body which is distinct from the first body to which the coupling device 1 is applied). Therefore, the element 4 can switch the position thereof relative to the cavity 5. In particular, the element 4 can selectively assume a disengagement position, in which the element 4 is arranged outside the cavity 5, and an engagement position, in which the element 4 is arranged inside the cavity 5. Advantageously, each switching between the engagement and disengagement positions assumes that the inlet section 7 is crossed by the element 4, from the outside of the cavity 5 inwards in the switches from the disengagement position to the engagement position or from the inside of the cavity 5 outwards in the switches from the engagement position to the disengagement position.

The opposite walls 6A and 6B of the cavity 5 are adapted to act as guide walls for the element 4, especially during the switching from the disengagement position to the engagement position, while the end wall 8 is adapted to act as abutment wall for the element 4, when the latter is in the engagement position.

The second element 3 comprises an operating portion 28, which is movable with respect to the connection portion 29 of the first element 2, by rotation (as in Figures 5 to 7, where the operating portion 28 of the second element 3 and the connection portion 29 of the first element 2 are articulated to each other by means of the pin 12) or, alternatively, by translation. With regard to the connection portion 29 of the first element 2, the operating portion 28 of the second element 3 can assume a working position and/or orientation 10 and a resting position and/or orientation 11.

The working position and/or orientation 10 of the operating portion 28 of the second element 3 is depicted in Figure 6, in conjunction with the engagement position of the element 4. As can be seen in Figure 6, in the working position and/or orientation 10, the operating portion 28 of the second element 3 causes an obstruction of the inlet section 7 affecting a significant fraction of the width of the inlet section 7, in particular an obstruction affecting a fraction of the width of the inlet section 7 comprised between a quarter and three quarters. Embodiments of the present invention are also contemplated in which the operating portion 28 of the second element 3, in the working position and/or orientation 10, causes a complete obstruction of the inlet section 7. The obstruction of the inlet section 7 in conjunction with the working position and/or orientation 10 of the operating portion 28 of the second element 3 is such as to inhibit switches in the position of the element 4 between the disengagement position and the engagement position.

The resting position and/or orientation of the operating portion 28 of the second element 3 is depicted in Figure 7, from which it can be appreciated that, in the resting position and/or orientation 11, the operating portion 28 of the second element 3 causes an obstruction of the inlet section 7 affecting a marginal fraction of the width of the inlet section 7, in particular an obstruction affecting a fraction of the width of the inlet section 7 smaller than a quarter. Embodiments of the present invention are also contemplated in which the operating portion 28 of the second element 3, in the resting position and/or orientation 11, does not cause any obstruction of the inlet section 7. The obstruction of the inlet section 7 in conjunction with the resting position and/or orientation 11 of the operating portion 28 of the second element 3 is such as to allow switches in the position of the element 4 between the disengagement position and the engagement position.

The obstruction of the inlet section 7 occurring at the resting position and/or orientation 11 is always less than the obstruction of the inlet section 7 occurring at the working position and/or orientation 10. In other words, in conjunction with the resting position and/or orientation 11, a fraction of the inlet section 7 is crossable which is greater than the fraction of the inlet section 7 crossable in conjunction with the working position and/or orientation 10.

In the embodiment of Figures 5 to 7, the first element 2 and the second element are constrained to each other and/or articulated by means of a pin 12, so that the second element 3 is movable by rotation with respect to the first element 2, the operating portion 28 of the second element 3 being in particular movable by rotation with respect to the connection portion 29 of the first element 2. In particular, the first element 2 and the second element 3 each comprise a housing seat for the pin 12 which is therefore present in the coupling device 1 as a further element which is distinct from the first element 2 and the second element 3. A relative rotation of the second element 3 in a first direction (for example clockwise in the depiction of Figures 5 to 7) causes a switching of the operating portion 28 from the resting position and/or orientation 11 to the working position and/or orientation 10. A relative rotation of the second element 3 in a second direction (for example counter-clockwise in the depiction of Figures 5 to 7) causes a switching of the operating portion 28 from the working position and/or orientation 10 to the resting position and/or orientation 11.

As can be seen in Figure 6, the operating portion 28 of the second element 3 exhibits a thrust surface 14 facing the inside of the cavity 5. The thrust surface 14 is shaped to exert, in the working position and/or orientation 10, a pressure on the element 4 when housed in the cavity 5, so as to make the engagement position of the element 4 stable. In particular, the pressure exerted by the thrust surface 14 on the element 4 pushes the element 4 to abut the end wall 8 of the cavity 5. If the element 4 is a rotating member of cylindrical shape, or more generally of axially symmetrical shape (for example a wheel axle), it is presumed that, in the working position and/or orientation 10, the constrictive action exerted on the element 4 by the thrust surface 14 and by the end wall 8 is such as to inhibit the rotation of the element 4.

The thrust surface 14 is shaped so as to allow an intentional switching of the position and/or orientation of the operating portion 28 of the second element 3 from the working position and/or orientation 10 to the resting position and/or orientation 11, even when the element 4 is housed in the cavity 5. Thereby, the disengagement position of the element 4 can be re-established starting from the engagement position. In this regard, the thrust surface 14 can exhibit a curvilinear profile which includes an inflection point, for example the curvilinear profile depicted in Figure 6.

As still visible in Figure 6, the operating portion 28 of the second element 3 further exhibits a facing surface 15 opposite the thrust surface 14, i.e., a facing surface 15 facing outwards. The facing surface 15 is shaped to allow the exercise thereon of a pressure suitable for causing an (at least provisional) switching of the position and/or of the orientation of the operating portion 28 from the working position and/or orientation 10 to the resting position and/or orientation 11. In particular, the pressure on the facing surface 15 can be exerted by the same element 4 during the insertion thereof in the cavity 5, i.e., during the switching thereof from the disengagement position to the engagement position.

The coupling device 1 can further comprise a spring 16 connected at the ends thereof to the first element 2 and to the second element 3, respectively. Alternatively to the spring 16, any alternative element capable of generating an elastic force between the first element 2 and the second element 3 can be used in the coupling device 1. In particular, the spring 16 is arranged in connection between an anchoring portion 45 of the first element 2 (in particular which is distinct from the connection portion 29) and an attachment portion 23 of the second element 3 (in particular which is distinct from the operating portion 28). The spring 16 advantageously acts in contrast to movements of the operating portion 28 of the second element 3 aimed at establishing the resting position and/or orientation 11 starting from the working position and/or orientation 10. Therefore, by means of the spring 16, stability is advantageously conferred to the working position and/or orientation 10 of the operating portion 28 of the second element 3.

As a result of the provision of the spring 16 configured as described above, a switching of the position and/or orientation of the operating portion 28 from the working position and/or orientation 10 to the resting position and/or orientation 11 can occur exclusively in the event of the exercise of an intentional external action on the second element 3. In order to allow such an exercise, the second element 3 further comprises a drive portion 25.

As can be appreciated in Figures 5 to 7, the drive portion 25 has a configuration such as to allow the exertion of an external action capable of overcoming the counteracting action of the spring 16 and consequently causing a switching of the position and/or orientation of the operating portion 28 of the second element 3 from the working position and/or orientation 10 to the resting position and/or orientation 11. In particular, by acting at the drive portion 25, it is possible to temporarily establish the resting position and/or orientation 11 of the operating portion 28 of the second element 3, so as to allow to reduce the obstructed fraction of the inlet section 7 (thus making it crossable by the element 4) and consequently to switch the position of the element 4 from the disengagement position to the engagement position. In possible embodiments of the present invention, the drive portion 25 of the second element 3 is connected, at an end thereof, to a control member such as a lever, a cable or a pedal. The second element 3 can have a lobed conformation whereby the operating portion 28, the attachment portion 23 and the drive portion 25 belong to distinct lobes of the second element 3.

Advantageously, the coupling device 1 further comprises a locking member configured to selectively suppress the action of the spring 16 and consequently make the resting position and/or orientation 11 of the operating portion 28 of the second element 3 stable, instead of the working position and/or orientation 10. The provision of the locking member allows to selectively arrange an ineffective position, in which the locking member does not cooperate with the second element 3, and an effective position, in which the locking member instead cooperates with the second element 3, maintaining the operating portion 28 of the second element 3 in the resting position and/or orientation 11.

In the embodiment of the coupling device 1 according to the invention depicted in Figures 5 to 7, an opening P0 is obtained in the second element 3 and an auxiliary opening P1 is obtained in the first element 2, in positions such that the opening P0 and the auxiliary opening P1 are at least partially superimposed on each other when the operating portion 28 of the second element 3 is in the resting position and/or orientation 11 (compare Figures 6 and 7 which respectively illustrate the working position and/or orientation 10 and the resting position and/or orientation 11). Furthermore, as visible in Figure 5, the coupling device 1 further comprises a locking member in the form of an elastic plate 13F having a first end, an effective portion and a second end. The first end of the elastic plate 13F is fixed (for example screwed) to the first element 2. The effective portion of the elastic plate 13F coincides with a folded portion capable of being inserted in the auxiliary opening P1 of the first element 2 and in the opening P0 of the second element 3, so as to maintain the operating portion 28 of the second element 3 in the resting position and/or orientation 11. The second end of the elastic plate 13F is a control end which can be grasped so as to cause a switching of the position of the locking member from the ineffective position to the effective position and/or a switching of the position of the locking member from the effective position to the ineffective position.

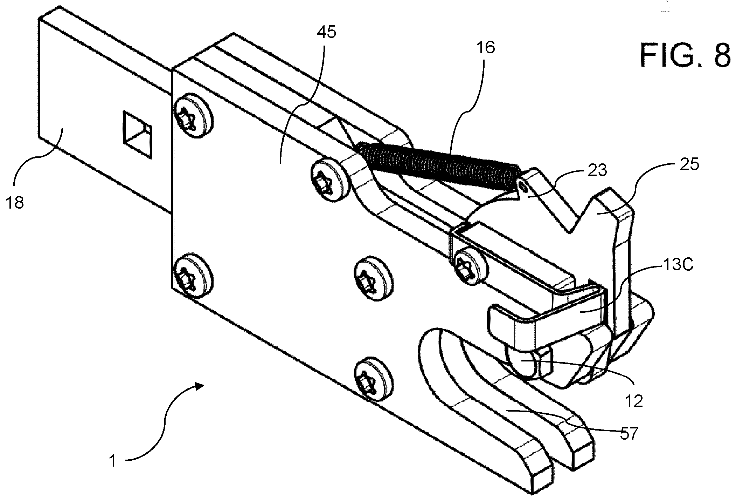

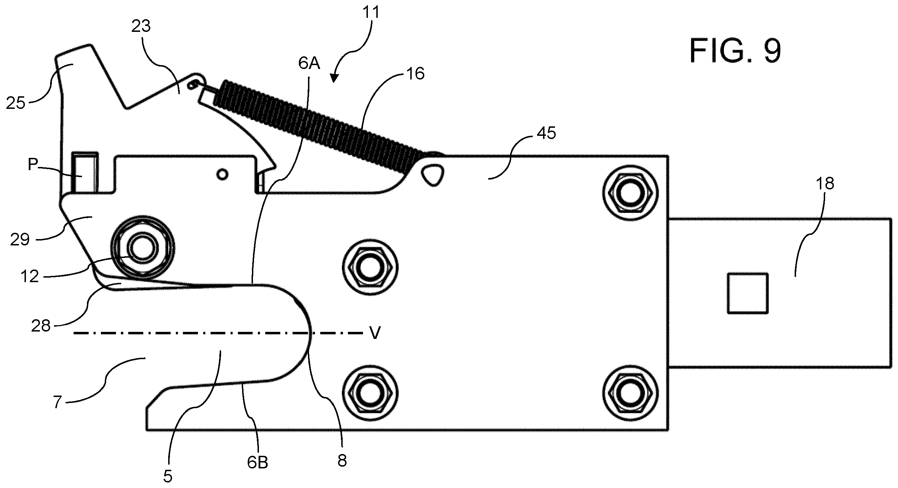

Figures 8 and 9 show a second embodiment of a coupling device 1 according to the present invention, configured to operate a releasable-type connection between a first body and a second body. Figure 8 offers an axonometric view of the coupling device 1 according to the second embodiment, while Figure 9 offers a view of the coupling device 1 in which the operating portion 28 of the second element 3 is in the resting position and/or orientation 11.

The second embodiment of the coupling device 1 is distinguished from the first embodiment (which has been previously described in detail) exclusively by a different configuration of the locking member, the remaining features of the coupling device 1 according to the first embodiment all also applying to the coupling device 1 according to the second embodiment (whereby it is considered completely unnecessary to repeat the features shared between the two embodiments).

The second embodiment of the coupling device 1 envisages that, in order to maintain the operating portion 28 of the second element 3 in the resting position and/or orientation 11, only one opening P is obtained in the second element 3. The opening P is in particular obtained in a position such that the opening P does not superimpose the first element 2 when the operating portion 28 of the second element 3 is in the resting position and/or orientation 11 and such that, when the effective portion of the elastic plate 13C is inserted in the opening P, any movement of the second element 3 is inhibited in order to restore the working position and/or orientation 10 of the operating portion 28 of the second element 3. The elastic plate 13C referred to in the second embodiment of the coupling device 1, has, with respect to the elastic plate 13F referred to in the first embodiment, a modified configuration (for example a different orientation with respect to the extension axis V of the cavity 5) dictated by the position of the opening P.

With reference to both the first embodiment and the second embodiment of the coupling device 1, the locking member has been disclosed below in the form of an elastic plate 13F or 13C. However, it should be underlined that the locking member can otherwise be included, for example, in the form of a through pin or in the form of a hook or in the form of a mechanical or electric lock or in the form of a ball grub screw.

The present invention further relates to a method for operating a releasable connection between a first body and a second body. The first body is provided with at least one coupling device 1 having the features described above, such a coupling device 1 being able to conform for example with the first embodiment of Figures 5 to 7 or with the second embodiment of Figures 8 and 9. The second body comprises an element 4 in disengagement position with respect to the coupling device 1.

In a first step of the connection method according to the invention, the resting position and/or orientation 11 of the operating portion 28 of the second element 3 is established, in particular through a provisional and/or temporary switching of the position and/or orientation of the operating portion 28 of the second element 3 from the working position and/or orientation 10 to the resting position and/or orientation 11. In particular, such a provisional and/or temporary switching is obtained by means of a pressure exerted by the element 4 of the second body on a surface of the second element 3, preferably on the facing surface 15.

In a second step of the connection method according to the invention, the element 4 of the second body is received in the cavity 5, the engagement position of the element 4 of the second body thus being established. In particular, at the end of such a second step, the element 4 of the second body abuttingly reaches one of the walls delimiting the cavity 5, preferably the end wall 8.

In a third step of the connection method according to the invention, the position and/or orientation of the operating portion 28 of the second element 3 is switched from the resting position and/or orientation 11 to the working position and/or orientation 10. The operating portion 28 of the second element 3 having switched the position and/or orientation thereof, assuming the working position and/or orientation, a surface of the operating portion 28, preferably the thrust surface 14, can exert a pressure against the element 4 of the second body. Consequently, the element 4 of the second body, being locked inside the cavity 5 between the first element 2 and the second element 3, can remain stably in the engagement position.

Advantageously, the first step of the method is preceded by a step of manoeuvring at least one among the first body and the second body, until a contact condition is established between a surface of the second element 3 of the coupling device 1 (preferably the facing surface 15) and a surface of the element 4 of the second body. Such a step can be actuated especially when one among the first body and the second body is a vehicle in particular for land maintenance, in particular a lawnmower tractor 77, and the other among the first body and the second body comprises an accessory for such a vehicle, in particular a cutting plate 85 of the front type.

Lastly, the present invention relates to a method for operating a disconnection between a first body and a second body, connected by means of at least one coupling device 1 having the features disclosed above, said coupling device 1 being able to conform, for example, to the first embodiment of Figures 5 to 7 or to the second embodiment of Figures 8 and 9, the coupling device 1 being applied to the first body, the second body comprising an element 4 in an engagement position with respect to the coupling device 1.

In a first step of the disconnection method according to the invention, the position and/or orientation of the operating portion 28 of the second element 3 is switched from the working position and/or orientation 10 to the resting position and/or orientation 11. Preferably, the switching of the first step of the disconnection method is a provisional and/or temporary switching of the position and/or orientation of the operating portion 28 of the second element 3 from the working position and/or orientation 10 to the resting position and/or orientation 11 and is actuated by means of an external action exerted on the second element 3 of the coupling device 1, in particular at the drive portion 25.

In a second step of the disconnection method according to the invention, the element 4 is moved away from the cavity 5 of the first element 2, so as to establish the disengagement position of the element 4 of the second body.

In a third step of the disconnection method according to the invention, said third step being an optional step of the disconnection method executed following the first step or following the second step, the working position and/or orientation 10 of the operating portion 28 of the second element 3 of the coupling device 1 is established, in particular by means of the return action exerted by the spring 16, said spring being configured to return the operating portion 28 of the second element 3, in the absence of external stresses, to the working position and/or orientation 10.

Advantageously, the disconnection method according to the invention ends with a step of manoeuvring at least one among the first body and the second body away from each other between the first body and the second body, in particular until any contact condition between the coupling device 1 and the element 4 of the second body is removed. Such a step can be actuated especially when one among the first body and the second body is a vehicle in particular for land maintenance, in particular a lawnmower tractor 77, and the other among the first body and the second body is an accessory for such a vehicle, in particular a cutting plate 85 of the front type.

### Further detailed description of the invention

Figure 6 depicts a sectional view of the assembly comprising the coupling device 1 and an external element 4, said external element 4 being able to be an element forming part of an accessory used in the agricultural sector or in the gardening sector, preferably a cutting plate. Such an accessory can be a snow plough blade, a blower, a spreader, a plough, a milling machine, a device adapted to collect grass residues and leaves from a surface. Such a coupling device 1 comprises at least a first element 2 and a second element 3. Such a coupling device 1 can also comprise a single element or can consist of a number of elements greater than two.

Such a first element 2 has a cavity 5 in at least one of the terminal ends thereof. Said cavity 5 can have an ideally symmetrical shape and be ideally parallel to the longitudinal axis V, thus having two substantially parallel opposing walls. However, embodiments of said cavity 5 in which the opposite walls 6 instead have an asymmetrical shape and/or have a predetermined inclination with respect to the longitudinal axis V are not in fact excluded within the meaning of the present invention.

According to a first embodiment of the present invention, said substantially parallel opposite walls can extend along the longitudinal axis V for a substantially identical length; in another embodiment of the invention the substantially parallel opposite walls can extend along the longitudinal axis V for a different length from each other. Preferably the width of said opposite walls is greater near said inlet section 7; preferably the width of said opposite walls is smaller near said end wall 8.

Said cavity 5 is delimited by an inlet section 7, communicating with the outside and adapted to allow the reception of the external element 4 and an end wall 8 adapted to abut said external element 4.

Said inlet section 7 is the opening through which the external element 4 is introduced inside the cavity 5 of the coupling device 1 at the end of a receiving step, as well as the opening through which the external element 4 is extracted from the cavity 5 of the coupling device 1 at the end of a removal step.

Said inlet section 7 extends transversely or orthogonally to the longitudinal axis V, being in the opposite position of said end wall 8. Preferably, said inlet section 7 extends for a greater width with respect to the width between said opposite walls, so as to facilitate the receiving step of said external element 4. In another embodiment of the invention, said inlet section 7 extends for a substantially identical width with respect to the width between said opposite walls.

Said cavity 5 can have, near said inlet section 7, chamfers having the function of facilitating the receiving step of said external element 4. In other embodiments of the invention, the chamfers can not be present or can be replaced by a transition portion characterized by a given radius of curvature.

Said cavity 5 is delimited by an end wall 8 adapted to abut said external element 4. Said end wall 8 can extend orthogonally to the longitudinal axis V, being in the opposite position with respect to said inlet section 7. Preferably, said end wall 8 extends for a smaller width with respect to the width between said opposite walls, so as to facilitate the adhesion of said external element 4 to said end wall 8. In another embodiment of the invention, said end wall 8 extends for a substantially identical width with respect to the width between said opposite walls or can extend for a greater width with respect to the width between said opposite walls.

Said end wall 8 can have a substantially rounded shape, as it is more adapted to receive said external element 4. In another embodiment of the invention, said end wall 8 can have other shapes, for example square, rectangular, hexagonal or characterised by the presence of several sides.

Said second element 3 can alternatively switch between a working position 10 and a resting position 11.

Said second element 3 is located in a working position 10 when said second element 3 comes into contact with said external element 4 and exerts a force thereon which makes it adhere to said end wall 8. In said working position 10, said second element 3 protrudes from at least one of said opposite walls of said first element 2 for a width comprised between one quarter and three quarters of the width between said two opposite walls of said first element 2.

Said second element 3 is in said rest position 11 when said second element 3 allows the removal of said external element 4 from said cavity 5 of the first element 2, said second element 3 no longer being in contact with said external element 4. In said resting position 11, said second element 3 protrudes from at least one of said opposite walls of said first element 2 for a width comprised between 0 and one quarter of the width between said two opposite walls of said first element 2.

Said second element 3 can be locked in said resting position 11 by a locking system, so as to facilitate a step of receiving said external element 4 in said cavity 5 of said coupling device 1 or to facilitate a step of disengagement of said external element 4 in said cavity 5 of said coupling device 1.

Said second element 3 can comprise a single inner wall facing said cavity 5. In an embodiment of the invention, the inner wall can have several sides, for example two sides, three sides, four sides, or even more sides.

Said locking system can alternatively comprise a pin passing through a hole obtained in said first element 2 and in said second element 3; a lateral drive fixed in said first element 2, having the possibility of connecting with said second element 3; a mechanical or electrical or electromechanical lock which allows the locking and unlocking of said second element 3; a ball grub screw fixed in said first element 2 and in contact with a guide and a cavity made in said second element 3. Such a list of possible devices which can be used in a coupling system according to the present invention is clearly to be understood as non-exhaustive, obviously alternative devices and/or devices equivalent to those listed can be used.

Said rest position 11 of said second element 3 can be determined by operating: directly said second element 3; the second element 3 by means of a cavity or a grip obtained on said second element 3; a lever functionally connected to said second element 3; a cable functionally connected to said second element 3; an element operable with a foot, functionally connected to said second element 3. Such a list of possible devices which can be used according to the present invention to force the second element 3 into the rest position is clearly to be understood as non-exhaustive, obviously alternative and/or equivalent devices to those listed can be used.

Said first element 2 is connected to said second element 3 by means of a pin 12; said pin 12 allows a switching of said second element 3 with respect to said first element 2 and in particular allows the switching between said working position 10 and said resting position 11.

Said first element 2 is connected to said second element 3 by means of an elastic element 16. Said elastic element 16 is in a state of tension while said second element 3 is in a resting state. While said second element 3 is in a resting state, the function of said elastic element 16 is to allow said second element 3 to promptly return to a working state when said external element 4 abuts said end wall 8. In switching the second element 3 between said resting state and said working state, the function of such an elastic element 16 is to guide and facilitate said transition, so that an escape, even accidental, of said external element 4 is not possible.

While said second element 3 is in a working state, the function of such an elastic element 16 is to keep said second element 3 in constant contact with said end wall 8, so as to avoid displacements or even an accidental exit of said external element 4. Said elastic element 16 is preferably a spring. Alternatively, merely by way of non-limiting example, the elastic element 16 can be an elastic, a piston, a cylinder, an electrical or electromechanical device.

Said coupling device 1 can be used individually or can be part of a system comprising a plurality of said coupling devices 1. Preferably, said coupling device 1 belongs to a system comprising two of said coupling devices 1 or three of said coupling devices 1 or four of said coupling devices 1 or five of said coupling devices 1.

The configuration of the coupling device 1 according to the present invention allows to have an innovative method for the quick coupling of an external element 4. In a first step of the method, the coupling device 1 is engaged with the external element 4. Such a first step of the method envisages that the coupling device 1 to be coupled is manoeuvred towards the external element 4 until it causes a contact between the external element 4 and the second element 3; alternatively such a first step of the method envisages that the external element 4 to be coupled is manoeuvred towards the coupling device 1, until it causes a contact between the external element 4 and the second element 3. In order to allow the entry of the external element 4 in the cavity 5, a switching of the second element 3 from said working position 10 to said resting position 11 is caused; this operation continues until said switching from said working position 10 to said resting position 11 is complete. With the continuation of the engagement operation of said external element 4 in the cavity 5, a switching of the second element 3 from said resting position 11 to said working position 10 is caused; the engagement operation ends when said external element 4 abuts said end wall 8. Such a first step of the method can be articulated in functionally equivalent manners and/or comprise a different number of operations. In a second step of the method, the coupling device 1 is disengaged from the external element 4. Such a second step of the method envisages a switching of said second element 3 from a working position 10 to a resting position 11, by means of the operation of the second element 3. Subsequently, a manoeuvring away from said external element 4 and/or a manoeuvring away from said external element 4 with respect to the coupling device 1 is executed, alternatively and/or jointly. Subsequently, said external element 4 is completely extracted from the cavity 5. Optionally, said second element 3 can be switched from said resting position 11 to said working position 10. Such a second step of the method can be articulated in functionally equivalent manners and/or comprise a different number of operations.

Such a method can comprise further steps and the receiving and disengagement steps can comprise further operations.

### Advantages of the invention

The coupling device according to the present invention can comprise ferrous material, metallic material, a metallic alloy, plastic material, preferably being made of steel.

The coupling device according to the present invention is preferably used in gardening vehicles, for example small tractors and tractors of the type with a driver on board ("ride-on") and/or of the "front-mower" type, i.e., having the front cutting plate (such a list being obviously only for exemplary purposes and not being exhaustive).

The coupling device according to the present invention can also be used in the field of agricultural vehicles, such as tractors, threshers, excavators, small and large operating machines. It can further be used in construction machinery, vehicles and trucks of any size.

From the above disclosure, it is clear that the present invention achieves all the prefixed objectives. In particular, the coupling device according to the present invention differs from the known technical solutions in the ability to allow a faster reception of an external element in such a device, thus reducing the time and operations required.

## Claims

1. Coupling device (1) configured to operate a releasable connection between a first body and a second body,
wherein said first body is a vehicle for gardening and/or agriculture and said second body is an accessory for said vehicle or wherein said second body is a vehicle for gardening and/or agriculture and said first body is an accessory for said vehicle, and
wherein said coupling device (1) comprises a first element (2) integrated with said first body or applicable to said first body, said first element (2) comprising a connection portion (29), a cavity (5) adapted to receive an external element (4) integral with said second body being obtained in said connection portion (29), the penetration of said cavity (5) in said connection portion (29) occurring starting from an inlet section (7), the penetration of said cavity (5) in said first element (2) occurring along a given extension trajectory, in particular along a given extension axis (V) starting from an inlet section (7), said inlet section (7) exhibiting a given width transversely to said extension trajectory, in particular orthogonally to said extension trajectory, said inlet section (7) being crossable by said external element (4) so as to allow switching of the position of said external element (4) between:
- a disengagement position, in which said external element (4) is arranged outside said cavity (5), and
- an engagement position, in which said external element (4) is arranged within said cavity (5),
**characterised in that** said coupling device (1) further comprises a second element (3), said second element (3) comprising an operating portion (28), said operating portion (28) being movable by rotation and/or by translation relative to the connection portion (29) of said first element (2) so as to be able to selectively assume:
- at least one working position and/or orientation (10), in said working position and/or orientation (10) said operating portion (28) of said second element (3) causing a complete obstruction of said inlet section (7) or causing an obstruction of said inlet section (7) limited to a first fraction of the width of said inlet section (7), in said working position and/or orientation (10) a switching in the position of said external element (4) from said disengagement position to said engagement position and/or a switching from said engagement position to said disengagement position being inhibited, and
- at least one resting position and/or orientation (11), in said resting position and/or orientation (11) said operating portion (28) of said second element (3) not causing any obstruction of said inlet section (7) or causing an obstruction of said inlet section (7) limited to a second fraction of the width of said inlet section (7), said second fraction being smaller than said first fraction, in said resting position and/or orientation (11) a switching in the position of said external element (4) from said disengagement position to said engagement position and/or a switching from said engagement position to said disengagement position being allowed.

2. Device (1) according to claim 1, wherein said cavity (5) is defined by two opposite walls and an end wall (8), said opposite walls extending in particular according to an ideal parallelism and/or an ideal symmetry with respect to said extension trajectory, said end wall (8) extending in particular seamlessly between said opposite walls,
optionally wherein said opposite walls are adapted to act as guide walls for said external element (4) during a switching in the position of said external element (4) from said disengagement position to said engagement position and/or from said engagement position to said disengagement position and/or wherein said end wall (8) is adapted to act as an abutment wall for said external element (4) in said engagement position, wherein said opposite walls can extend for a substantially identical length or for a different length from each other, and/or
optionally wherein said cavity (5) exhibits a convergent profile, whereby the distance between said opposite walls adjacent to said inlet section (7) is greater than the distance between said opposite walls adjacent to said end wall (8) and/or
optionally wherein said end wall (8) is integrally curved or comprises at least one curved section, in particular at least one circumferential arc section, or has a polygonal profile.

3. Device (1) according to any one of the preceding claims, wherein the operating portion (28) of said second element (3) exhibits a thrust surface (14) facing inwards of said cavity (5), said thrust surface (14) being shaped to exert, in said working position and/or orientation (10), a pressure on said external element (4) when in said engagement position, said pressure being in particular sufficient to make said engagement position of said external element (4) stable, the pressure exerted by said thrust surface (14) on said external element (4) pushing said external element (4) to abut the end wall (8) of said cavity (5),
optionally wherein said thrust surface (14) is shaped so as to allow an intentional switching of the position and/or orientation of the operating portion (28) of said second element (3) from said working position and/or orientation (10) to said resting position and/or orientation (11) when said external element (4) is in said engagement position, in particular for the purpose of a subsequent switching of said external element (4) in said disengagement position, and/or
optionally wherein the operating portion (28) of said second element (3) further exhibits a facing surface (15) facing outwards and/or opposite said thrust surface (14), said facing surface (15) being configured to allow said external element (4) to exert a pressure capable of causing a switching of the position and/or orientation of said operating portion (28) from said working position and/or orientation (10) to said resting position and/or orientation (11), in particular a temporary switching to said resting position and/or orientation (11) suitable for establishing said engagement position of said external element (4) starting from said disengagement position.

4. Device (1) according to any one of the preceding claims, further comprising a pin (12), said pin (12) being a component of said device (1) which is distinct from said first element (2) and from said second element (3) or a component of said device (1) integrated with said first element (2) or said second element (3), wherein said first element (2) is constrained to said second element (3) by means of said pin (12), said pin (12) allowing said second element (3) to rotate with respect to said first element (2) and/or to translate with respect to said first element (2), so as to switch the position and/or orientation of the operating portion (28) of said second element (3) between said working position and/or orientation (10) and said resting position and/or orientation (11), optionally wherein said external element (4) has an axially symmetrical shape, in particular a cylindrical shape, and wherein said device (1) is configured to allow said external element (4), when said external element (4) is in said engagement position and/or when the operating portion (28) of said second element (3) is in said working position and/or orientation (10), to rotate around an axis thereof and/or to translate along an axis thereof or said device (1) is configured to inhibit said external element (4), when said external element (4) is in said engagement position and/or when the operating portion of said second element (3) is in said working position and/or orientation (10), to rotate around the axis thereof and/or to translate along an axis thereof, optionally wherein said first element (2) and said second element (3) comprise in particular a respective housing seat of said pin (12), wherein said second element (3) is movable by rotation with respect to said first element (2), a relative rotation of said second element (3) in a first direction causing a switching of said operating portion (28) from said working position and/or orientation (10) to said resting position and/or orientation (11), a relative rotation of said second element (3) in a second direction opposite said first direction causing a switching of said operating portion (28) from said resting position and/or orientation (11) to said working position and/or orientation (10).

5. Device (1) according to any one of the preceding claims, further comprising an elastic element, preferably a spring (16), wherein said elastic element is arranged in connection between an anchoring portion (45) of said first element (2) and an attachment portion (23) of said second element (3), said anchoring portion (45) being in particular distinct from said connection portion (29) and/or said attachment portion (23) being in particular distinct from said operating portion (28), wherein said elastic element is configured to act against movements of the operating portion (28) of said second element (3) aimed at establishing said resting position and/or said resting orientation (11) starting from said working position and/or orientation (10), in particular so as to make said working position and/or orientation (10) of said operating portion (28) stable in the absence of external actions exerted on said second element (3),
optionally wherein said second element (3) further comprises a drive portion (25) configured to allow the exertion of an external action capable of overcoming the counteracting action of said elastic element and causing a switching of the position and/or orientation of said operating portion (28) from said working position and/or orientation (10) to said resting position and/or orientation (11), in particular a temporary switching to said resting position and/or orientation (11) suitable for establishing said disengagement position of said external element (4) from said engagement position,
in particular wherein said second element (3) comprises a first lobe, a second lobe and a third lobe, said first lobe integrating said operating portion (28), said second lobe integrating said attachment portion (23) and said third lobe integrating said drive portion (25), and wherein said first lobe, said second lobe and said third lobe are angularly offset from each other.

6. Device (1) according to any one of the preceding claims, wherein said device (1) further comprises a locking member, said locking member in particular comprising at least one elastic plate in particular fixed to said first element (2), said locking member being manually or automatically switchable between:
- an ineffective position, in which said locking member does not cooperate with said second element (3), and
- an effective position, in which said locking member cooperates with said second element (3) so as to lock said second element (3) in particular when the operating portion (28) of said second element (3) is in said resting position and/or orientation (11),
optionally wherein an opening (PO) is obtained in said second element (3) and an auxiliary opening (P1) is obtained in said first element (2), in particular in positions such that said opening (PO) and said auxiliary opening (P1) are at least partially superimposed on each other when the operating portion (28) of said second element (3) is in said resting position and/or orientation (11), in said effective position said locking member being inserted in said opening (PO) and in said auxiliary opening (P1) or
optionally wherein an opening (P) is obtained in said second element (3), in particular in such a position that said opening (P) is not superimposed on said first element (2) when the operating portion (28) of said second element (3) is in said resting position and/or orientation (11), in said effective position said locking member being inserted in said opening (P).

7. Device (1) according to any one of the preceding claims, wherein said device (1) comprises means for forcing a provisional switching of the position and/or orientation of the operating portion (28) of said second element (3) in said resting position and/or orientation (11), comprising:
a) an end of said second element (3) and/or
b) a lever functionally connected to said second element (3) and/or
c) a cable functionally connected to said second element (3) and/or
d) an element operable with a foot, functionally connected to said second element (3) and/or
wherein said device (1) comprises means for stabilizing said resting position and/or orientation (11) of the operating portion (28) of said second element (3), comprising:
a) a pin passing through said first element (2) and said second element (3) and/or
b) a lateral drive fixed in said first element (2) with the possibility of coupling in said second element (3) and/or
c) a mechanical or electrical lock which allows the locking and unlocking of said second element (3) and/or
d) a ball grub screw fixed in said first element (2) and in contact with said second element (3).

8. Device (1) according to any one of the preceding claims, wherein, in said working position and/or orientation (10), said operating portion (28) of said second element (3) causes an obstruction of said inlet section (7) comprised between one quarter and three quarters of the width of said inlet section (7) and/or
wherein, in said resting position and/or orientation (11), said operating portion (28) of said second element (3) causes an obstruction of said inlet section (7) which is less than one quarter of the width of said inlet section (7).

9. Device (1) according to any one of the preceding claims, wherein said first element (2) defines a seat (57) and wherein said second element (3) is housed in said seat (57) at least for a preponderant fraction of the extension thereof, in particular wherein said first element (2) and said second element (3) are ideally symmetrical with respect to a common plane of symmetry (S) and/or
wherein said first element (2) is made of metallic material, in particular steel, and/or wherein said second element (3) is made of metallic material, in particular steel and/or
wherein, in use, said extension trajectory, in particular said extension axis (V), is an ideally horizontal axis and/or wherein, in use, the geometric centre of gravity of said second element (3) is located above said cavity (5).

10. System (9) comprising at least:
a) a first body and
b) a second body,
wherein said first body is provided with at least one coupling device (1) according to any one of claims 1 to 9 and wherein said coupling device (1) is connected, in particular releasably, to an element (4) of said second body or is configured to be connected, in particular releasably, to an element (4) of said second body,
optionally wherein said first body is provided with a plurality of coupling devices (1), in particular from two to five coupling devices (1), each coupling device (1) of said plurality being according to any one of claims 1 to 9, the arrangement of said coupling devices (1) on said first body being in particular such as to define a plane of symmetry, wherein the coupling devices (1) of said plurality are connected, in particular releasably, to one or more elements (4) of said second body or are configured to be connected, in particular releasably, to one or more elements (4) of said second body.

11. System (9) according to claim 10, wherein said second body is a lawnmower tractor (77) and said first body is a cutting plate (85) in particular of the front type, and/or
wherein said element of said second body is a wheel axle, in particular a front wheel axle, or is a stationary shaft (54) substantially coaxial to a wheel axle, in particular a front wheel axle, of said second body and/or
wherein said first element (2) of said coupling device (1) comprises a mounting portion (18), in particular opposite said connection portion (29), said mounting portion (18) being configured to allow the assembly of said coupling device (1) to an element of said first body, said assembly being in particular carried out by means of screw connections and/or mechanical interlocking.

12. Method for operating a releasable connection between a first body and a second body,
wherein said first body comprises a land maintenance vehicle and said second body comprises an accessory for said vehicle or said second body comprises a land maintenance vehicle and said first body comprises an accessory for said vehicle, and
wherein said first body is provided with at least one coupling device (1) according to any one of claims 1 to 9, said second body comprising an element (4), in particular in said disengagement position with respect to said device (1), wherein said method comprises at least the steps of:
i) establishing said resting position and/or orientation (11) of the operating portion (28) of the second element (3) of said device (1),
ii) receiving said element (4) of said second body in the cavity (5) of the first element (2) of said device (1), in particular so as to establish said engagement position of said element (4) of said second body with respect to said device (1) and
iii) switching the position and/or orientation of the operating portion (28) of the second element (3) of said device (1) from said resting position and/or orientation (11) to said working position and/or orientation (10).

13. Method according to claim 12, wherein said step i) comprises the step of causing a provisional switching of the position and/or orientation of the operating portion (28) of the second element (3) of said device (1) from said working position and/or orientation (10) to said resting position and/or orientation (11), in particular by means of a pressure exerted by said element (4) of said second body on a surface of the second element (3) of said device (1).

14. Method according to claim 12 or claim 13, wherein said step iii) comprises the step of exerting a pressure of a surface of the second element (3) of said device (1) against said element (4) of said second body.

15. Method according to any one of claims 12 to 14, wherein said step i) is preceded by a step of manoeuvring said vehicle so as to approach said accessory, in particular until a contact condition is established between a surface of the second element (3) of said device (1) and said element (4) of said second body.

## Patentansprüche

1. Kopplungsvorrichtung (1), welche dazu eingerichtet ist, eine lösbare Verbindung zwischen einem ersten Körper und einem zweiten Körper zu betätigen,
wobei der erste Körper ein Fahrzeug für Gartenarbeit und/oder Landwirtschaft ist und der zweite Körper ein Zubehör für das Fahrzeug ist, oder wobei der zweite Körper ein Fahrzeug für Gartenarbeit und/oder Landwirtschaft ist und der erste Körper ein Zubehör für das Fahrzeug ist, und
wobei die Kopplungsvorrichtung (1) ein erstes Element (2) umfasst, welches in den ersten Körper integriert ist oder an dem ersten Körper anbringbar ist, wobei das erste Element (2) einen Verbindungsabschnitt (29) umfasst, wobei ein Hohlraum (5), welcher dazu eingerichtet ist, ein externes Element (4) aufzunehmen, welches integral mit dem zweiten Körper vorliegt, in dem Verbindungsabschnitt (29) erhalten ist, wobei das Eindringen des Hohlraums (5) in den Verbindungsabschnitt (29) ausgehend von einem Einlassabschnitt (7) erfolgt, wobei das Eindringen des Hohlraums (5) in das erste Element (2) entlang einer gegebenen Erstreckungstrajektorie, insbesondere entlang einer gegebenen Erstreckungsachse (V) ausgehend von einem Einlassabschnitt (7), erfolgt, wobei der Einlassabschnitt (7) eine gegebene Breite transversal zu der Erstreckungstrajektorie, insbesondere orthogonal zu der Erstreckungstrajektorie, aufweist, wobei der Einlassabschnitt (7) von dem externen Element (4) durchquerbar ist, um zu ermöglichen, die Position des externen Elements (4) umzuschalten, zwischen:
- einer Außereingriffsposition, in welcher das externe Element (4) außerhalb des Hohlraums (5) angeordnet ist, und
- einer Eingriffsposition, in welcher das externe Element (4) innerhalb des Hohlraums (5) angeordnet ist,
**dadurch gekennzeichnet, dass** die Kopplungsvorrichtung (1) ferner ein zweites Element (3) umfasst, wobei das zweite Element (3) einen Betätigungsabschnitt (28) umfasst, wobei der Betätigungsabschnitt (28) durch Rotation und/oder durch Translation relativ zu dem Verbindungsabschnitt (29) des ersten Elements (2) bewegbar ist, um dazu in der Lage zu sein, selektiv einzunehmen:
- wenigstens eine Arbeitsposition und/oder -orientierung (10), wobei in der Arbeitsposition und/oder -orientierung (10) der Betätigungsabschnitt (28) des zweiten Elements (3) eine vollständige Sperrung des Einlassabschnitts (7) bewirkt oder eine Sperrung des Einlassabschnitts (7) bewirkt, welche auf einen ersten Anteil der Breite des Einlassabschnitts (7) begrenzt ist, wobei in der Arbeitsposition und/oder -orientierung (10) ein Umschalten der Position des externen Elements (4) von der Außereingriffsposition in die Eingriffsposition und/oder ein Umschalten von der Eingriffsposition in die Außereingriffsposition gehemmt ist, und
- wenigstens eine Ruheposition und/oder -orientierung (11), wobei in der Ruheposition und/oder -orientierung (11) der Betätigungsabschnitt (28) des zweiten Elements (3) keine Sperrung des Einlassabschnitts (7) bewirkt oder eine Sperrung des Einlassabschnitts (7) bewirkt, welche auf einen zweiten Anteil der Breite des Einlassabschnitts (7) begrenzt ist, wobei der zweite Anteil kleiner als der erste Anteil ist, wobei in der Ruheposition und/oder - orientierung (11) ein Umschalten der Position des externen Elements (4) von der Außereingriffsposition in die Eingriffsposition und/oder ein Umschalten von der Eingriffsposition in die Außereingriffsposition erlaubt ist.

2. Vorrichtung (1) nach Anspruch 1, wobei der Hohlraum (5) durch zwei gegenüberliegende Wände und eine Stirnwand (8) definiert ist, wobei die gegenüberliegenden Wände sich insbesondere gemäß einem idealen Parallelismus und/oder einer idealen Symmetrie bezüglich der Erstreckungstrajektorie erstrecken, wobei die Stirnwand (8) sich insbesondere nahtlos zwischen den gegenüberliegenden Wänden erstreckt,
optional wobei die gegenüberliegenden Wände dazu eingerichtet sind, als Führungswände für das externe Element (4) während eines Umschaltens der Position des externen Elements (4) von der Außereingriffsposition in die Eingriffsposition und/oder von der Eingriffsposition in die Außereingriffsposition zu wirken, und/oder wobei die Stirnwand (8) dazu eingerichtet ist, als eine Anschlagwand für das externe Element (4) in der Eingriffsposition zu wirken, wobei die gegenüberliegenden Wände sich für eine im Wesentlichen identische Länge oder für eine voneinander verschiedene Länge erstrecken können, und/oder
optional wobei der Hohlraum (5) ein konvergentes Profil aufweist, wodurch der Abstand zwischen den gegenüberliegenden Wänden benachbart zu dem Einlassabschnitt (7) größer ist als der Abstand zwischen den gegenüberliegenden Wänden benachbart zu der Stirnwand (8), und/oder optional wobei die Stirnwand (8) integral gekrümmt ist oder wenigstens einen gekrümmten Abschnitt, insbesondere wenigstens einen Umfangsbogenabschnitt, umfasst oder ein polygonales Profil aufweist.

3. Vorrichtung (1) nach einem der vorhergehenden Ansprüche, wobei der Betätigungsabschnitt (28) des zweiten Elements (3) eine Druckfläche (14) aufweist, welche dem Inneren des Hohlraums (5) zugewandt ist, wobei die Druckfläche (14) derart geformt ist, dass sie in der Arbeitsposition und/oder - orientierung (10) einen Druck auf das externe Element (4) ausübt, wenn dieses sich in der Eingriffsposition befindet, wobei der Druck insbesondere ausreichend ist, um die Eingriffsposition des externen Elements (4) stabil zu gestalten, wobei der von der Druckfläche (14) auf das externe Element (4) ausgeübte Druck derart gegen das externe Element (4) drückt, dass es an die Stirnwand (8) des Hohlraums (5) anschlägt,
optional wobei die Druckfläche (14) derart geformt ist, dass sie ein absichtliches Umschalten der Position und/oder Orientierung des Betätigungsabschnitts (28) des zweiten Elements (3) von der Arbeitsposition und/oder -orientierung (10) in die Ruheposition und/oder -orientierung (11) ermöglicht, wenn das externe Element (4) sich in der Eingriffsposition befindet, insbesondere zum Zweck eines nachfolgenden Umschaltens des externen Elements (4) in die Außereingriffsposition, und/oder
optional wobei der Betätigungsabschnitt (28) des zweiten Elements (3) ferner eine Gegenfläche (15) aufweist, welche dem Äußeren zugewandt ist und/oder der Druckfläche (14) gegenüberliegt, wobei die Gegenfläche (15) dazu eingerichtet ist, dem externen Element (4) zu ermöglichen, einen Druck auszuüben, welcher dazu in der Lage ist, ein Umschalten der Position und/oder Orientierung des Betätigungsabschnitts (28) von der Arbeitsposition und/oder - orientierung (10) in die Ruheposition und/oder -orientierung (11), insbesondere ein vorübergehendes Umschalten in die Ruheposition und/oder -orientierung (11), welches geeignet ist, die Eingriffsposition des externen Elements (4) ausgehend von der Außereingriffsposition herzustellen, zu bewirken.

4. Vorrichtung (1) nach einem der vorhergehenden Ansprüche, ferner umfassend einen Stift (12), wobei der Stift (12) eine Komponente der Vorrichtung (1), welche von dem ersten Element (2) und von dem zweiten Element (3) verschieden ist, oder eine Komponente der Vorrichtung (1) ist, welche in das erste Element (2) oder das zweite Element (3) integriert ist, wobei das erste Element (2) mittels des Stifts (12) an das zweite Element (3) gebunden ist, wobei der Stift (12) dem zweiten Element (3) ermöglicht, sich bezüglich des ersten Elements (2) zu drehen und/oder sich bezüglich des ersten Elements (2) zu verschieben, um die Position und/oder Orientierung des Betätigungsabschnitts (28) des zweiten Elements (3) zwischen der Arbeitsposition und/oder -orientierung (10) und der Ruheposition und/oder - orientierung (11) umzuschalten, optional wobei das externe Element (4) eine achsensymmetrische Form, insbesondere eine zylindrische Form aufweist, und wobei die Vorrichtung (1) dazu eingerichtet ist, dem externen Element (4) zu ermöglichen, wenn das externe Element (4) sich in der Eingriffsposition befindet und/oder wenn der Betätigungsabschnitt (28) des zweiten Elements (3) sich in der Arbeitsposition und/oder -orientierung (10) befindet, sich um eine Achse davon zu drehen und/oder sich entlang einer Achse davon zu verschieben, oder die Vorrichtung (1) dazu eingerichtet ist, das externe Element (4) daran zu hindern, wenn das externe Element (4) sich in der Eingriffsposition befindet und/oder wenn der Betätigungsabschnitt des zweiten Elements (3) sich in der Arbeitsposition und/oder -orientierung (10) befindet, sich um die Achse davon zu drehen und/oder sich entlang einer Achse davon zu verschieben,
optional wobei das erste Element (2) und das zweite Element (3) insbesondere einen jeweiligen Aufnahmesitz des Stifts (12) umfassen, wobei das zweite Element (3) durch Rotation bezüglich des ersten Elements (2) bewegbar ist, wobei eine relative Rotation des zweiten Elements (3) in einer ersten Richtung ein Umschalten des Betätigungsabschnitts (28) von der Arbeitsposition und/oder -orientierung (10) in die Ruheposition und/oder -orientierung (11) bewirkt, wobei eine relative Rotation des zweiten Elements (3) in einer zweiten Richtung, welche der ersten Richtung entgegengesetzt ist, ein Umschalten des Betätigungsabschnitts (28) von der Ruheposition und/oder -orientierung (11) in die Arbeitsposition und/oder -orientierung (10) bewirkt.

5. Vorrichtung (1) nach einem der vorhergehenden Ansprüche, ferner umfassend ein elastisches Element, vorzugsweise eine Feder (16), wobei das elastische Element derart angeordnet ist, dass es eine Verbindung zwischen einem Verankerungsabschnitt (45) des ersten Elements (2) und einem Befestigungsabschnitt (23) des zweiten Elements (3) herstellt, wobei der Verankerungsabschnitt (45) insbesondere von dem Verbindungsabschnitt (29) verschieden ist und/oder der Befestigungsabschnitt (23) insbesondere von dem Betätigungsabschnitt (28) verschieden ist, wobei das elastische Element dazu eingerichtet ist, Bewegungen des Betätigungsabschnitts (28) des zweiten Elements (3) entgegenzuwirken, welche darauf abzielen, die Ruheposition und/oder -orientierung (11) ausgehend von der Arbeitsposition und/oder - orientierung (10) herzustellen, insbesondere um die Arbeitsposition und/oder - orientierung (10) des Betätigungsabschnitts (28) in der Abwesenheit externer Einwirkungen, welche auf das zweite Element (3) ausgeübt werden, stabil zu gestalten,
optional wobei das zweite Element (3) ferner einen Antriebsabschnitt (25) umfasst, welcher dazu eingerichtet ist, die Ausübung einer externen Einwirkung zu ermöglichen, welche dazu in der Lage ist, die entgegenwirkende Einwirkung des elastischen Elements zu überwinden, und ein Umschalten der Position und/oder Orientierung des Betätigungsabschnitts (28) von der Arbeitsposition und/oder -orientierung (10) in die Ruheposition und/oder -orientierung (11), insbesondere ein vorübergehendes Umschalten in die Ruheposition und/oder - orientierung (11), welches geeignet ist, die Außereingriffsposition des externen Elements (4) ausgehend von der Eingriffsposition herzustellen, zu bewirken, insbesondere wobei das zweite Element (3) einen ersten Lappen, einen zweiten Lappen und einen dritten Lappen umfasst, wobei der erste Lappen den Betätigungsabschnitt (28) integriert, der zweite Lappen den Befestigungsabschnitt (23) integriert und der dritte Lappen den Antriebsabschnitt (25) integriert, und wobei der erste Lappen, der zweite Lappen und der dritte Lappen winkelmäßig voneinander versetzt sind.

6. Vorrichtung (1) nach einem der vorhergehenden Ansprüche, wobei die Vorrichtung (1) ferner ein Verriegelungselement umfasst, wobei das Verriegelungselement insbesondere wenigstens ein Federblatt umfasst, welches insbesondere an dem ersten Element (2) befestigt ist, wobei das Verriegelungselement manuell oder automatisch umschaltbar ist, zwischen:
- einer unwirksamen Position, in welcher das Verriegelungselement nicht mit dem zweiten Element (3) zusammenwirkt, und
- einer wirksamen Position, in welcher das Verriegelungselement mit dem zweiten Element (3) zusammenwirkt, um das zweite Element (3) zu verriegeln, insbesondere wenn der Betätigungsabschnitt (28) des zweiten Elements (3) sich in der Ruheposition und/oder -orientierung (11) befindet, optional wobei eine Öffnung (P0) in dem zweiten Element (3) erhalten ist und eine Hilfsöffnung (P1) in dem ersten Element (2) erhalten ist, insbesondere in Positionen derart, dass die Öffnung (P0) und die Hilfsöffnung (P1) wenigstens teilweise aufeinander überlagert sind, wenn der Betätigungsabschnitt (28) des zweiten Elements (3) sich in der Ruheposition und/oder -orientierung (11) befindet, wobei in der wirksamen Position das Verriegelungselement in die Öffnung (P0) und in die Hilfsöffnung (P1) eingeführt ist, oder
optional wobei eine Öffnung (P) in dem zweiten Element (3) erhalten ist, insbesondere in einer derartigen Position, dass die Öffnung (P) nicht auf dem ersten Element (2) überlagert ist, wenn der Betätigungsabschnitt (28) des zweiten Elements (3) sich in der Ruheposition und/oder -orientierung (11) befindet, wobei in der wirksamen Position das Verriegelungselement in die Öffnung (P) eingeführt ist.

7. Vorrichtung (1) nach einem der vorhergehenden Ansprüche, wobei die Vorrichtung (1) Mittel zum Erzwingen eines vorläufigen Umschaltens der Position und/oder Orientierung des Betätigungsabschnitts (28) des zweiten Elements (3) in die Ruheposition und/oder -orientierung (11) umfasst, umfassend:
a) ein Ende des zweiten Elements (3) und/oder
b) einen Hebel, welcher funktional mit dem zweiten Element (3) verbunden ist, und/oder
c) ein Seil, welches funktional mit dem zweiten Element (3) verbunden ist, und/oder
d) ein mit einem Fuß betätigbares Element, welches funktional mit dem zweiten Element (3) verbunden ist, und/oder
wobei die Vorrichtung (1) Mittel zum Stabilisieren der Ruheposition und/oder - orientierung (11) des Betätigungsabschnitts (28) des zweiten Elements (3) umfasst, umfassend:
a) einen Stift, welcher durch das erste Element (2) und das zweite Element (3) verläuft, und/oder
b) einen seitlichen Antrieb, welcher in dem ersten Element (2) befestigt ist, mit der Möglichkeit der Kopplung in dem zweiten Element (3), und/oder
c) eine mechanische oder elektrische Verriegelung, welche das Verriegeln und Entriegeln des zweiten Elements (3) ermöglicht, und/oder
d) einen Kugelgewindestift, welcher in dem ersten Element (2) befestigt ist und mit dem zweiten Element (3) in Kontakt steht.

8. Vorrichtung (1) nach einem der vorhergehenden Ansprüche, wobei in der Arbeitsposition und/oder -orientierung (10) der Betätigungsabschnitt (28) des zweiten Elements (3) eine Sperrung des Einlassabschnitts (7) bewirkt, welche zwischen einem Viertel und drei Vierteln der Breite des Einlassabschnitts (7) liegt, und/oder
wobei in der Ruheposition und/oder -orientierung (11) der Betätigungsabschnitt (28) des zweiten Elements (3) eine Sperrung des Einlassabschnitts (7) bewirkt, welche weniger als ein Viertel der Breite des Einlassabschnitts (7) beträgt.

9. Vorrichtung (1) nach einem der vorhergehenden Ansprüche, wobei das erste Element (2) einen Sitz (57) definiert und wobei das zweite Element (3) wenigstens für einen überwiegenden Anteil der Erstreckung davon in dem Sitz (57) aufgenommen ist, insbesondere wobei das erste Element (2) und das zweite Element (3) bezüglich einer gemeinsamen Symmetrieebene (S) ideal symmetrisch sind, und/oder
wobei das erste Element (2) aus metallischem Material, insbesondere Stahl, hergestellt ist, und/oder wobei das zweite Element (3) aus metallischem Material, insbesondere Stahl, hergestellt ist, und/oder
wobei im Gebrauch die Erstreckungstrajektorie, insbesondere die Erstreckungsachse (V), eine ideal horizontale Achse ist, und/oder wobei im Gebrauch der geometrische Schwerpunkt des zweiten Elements (3) oberhalb des Hohlraums (5) angeordnet ist.

10. System (9), umfassend wenigstens:
a) einen ersten Körper und
b) einen zweiten Körper,
wobei der erste Körper mit wenigstens einer Kopplungsvorrichtung (1) nach einem der Ansprüche 1 bis 9 bereitgestellt ist und wobei die Kopplungsvorrichtung (1) insbesondere lösbar mit einem Element (4) des zweiten Körpers verbunden ist oder dazu eingerichtet ist, insbesondere lösbar mit einem Element (4) des zweiten Körpers verbunden zu sein,
optional wobei der erste Körper mit einer Mehrzahl von Kopplungsvorrichtungen (1), insbesondere von zwei bis fünf Kopplungsvorrichtungen (1), bereitgestellt ist, wobei jede Kopplungsvorrichtung (1) der Mehrzahl nach einem der Ansprüche 1 bis 9 ausgeführt ist, wobei die Anordnung der Kopplungsvorrichtungen (1) an dem ersten Körper insbesondere derart ist, dass eine Symmetrieebene definiert wird, wobei die Kopplungsvorrichtungen (1) der Mehrzahl insbesondere lösbar mit einem oder mehreren Elementen (4) des zweiten Körpers verbunden sind oder dazu eingerichtet sind, insbesondere lösbar mit einem oder mehreren Elementen (4) des zweiten Körpers verbunden zu sein.

11. System (9) nach Anspruch 10, wobei der zweite Körper ein Rasenmähtraktor (77) ist und der erste Körper ein Mähdeck (85), insbesondere des Fronttyps, ist, und/oder
wobei das Element des zweiten Körpers eine Radachse, insbesondere eine Vorderradachse, oder eine feststehende Welle (54) ist, welche im Wesentlichen koaxial zu einer Radachse, insbesondere einer Vorderradachse, des zweiten Körpers ist, und/oder wobei das erste Element (2) der Kopplungsvorrichtung (1) einen Montageabschnitt (18), insbesondere dem Verbindungsabschnitt (29) gegenüberliegend, umfasst, wobei der Montageabschnitt (18) dazu eingerichtet ist, die Montage der Kopplungsvorrichtung (1) an einem Element des ersten Körpers zu ermöglichen, wobei die Montage insbesondere mittels Schraubenverbindungen und/oder mechanischen Ineinandergreifens durchgeführt wird.

12. Verfahren zum Betätigen einer lösbaren Verbindung zwischen einem ersten Körper und einem zweiten Körper,
wobei der erste Körper ein Landpflegefahrzeug umfasst und der zweite Körper ein Zubehör für das Fahrzeug umfasst, oder der zweite Körper ein Landpflegefahrzeug umfasst und der erste Körper ein Zubehör für das Fahrzeug umfasst, und
wobei der erste Körper mit wenigstens einer Kopplungsvorrichtung (1) nach einem der Ansprüche 1 bis 9 bereitgestellt ist, wobei der zweite Körper ein Element (4) umfasst, welches sich insbesondere in der Außereingriffsposition bezüglich der Vorrichtung (1) befindet, wobei das Verfahren wenigstens die folgenden Schritte umfasst:
i) Herstellen der Ruheposition und/oder -orientierung (11) des Betätigungsabschnitts (28) des zweiten Elements (3) der Vorrichtung (1),
ii) Aufnehmen des Elements (4) des zweiten Körpers in den Hohlraum (5) des ersten Elements (2) der Vorrichtung (1), insbesondere um die Eingriffsposition des Elements (4) des zweiten Körpers bezüglich der Vorrichtung (1) herzustellen, und
iii) Umschalten der Position und/oder Orientierung des Betätigungsabschnitts (28) des zweiten Elements (3) der Vorrichtung (1) von der Ruheposition und/oder -orientierung (11) in die Arbeitsposition und/oder -orientierung (10).

13. Verfahren nach Anspruch 12, wobei Schritt i) den Schritt eines Bewirkens eines vorläufigen Umschaltens der Position und/oder Orientierung des Betätigungsabschnitts (28) des zweiten Elements (3) der Vorrichtung (1) von der Arbeitsposition und/oder -orientierung (10) in die Ruheposition und/oder - orientierung (11) umfasst, insbesondere mittels eines Drucks, welcher von dem Element (4) des zweiten Körpers auf eine Fläche des zweiten Elements (3) der Vorrichtung (1) ausgeübt wird.

14. Verfahren nach Anspruch 12 oder Anspruch 13, wobei Schritt iii) den Schritt eines Ausübens eines Drucks einer Fläche des zweiten Elements (3) der Vorrichtung (1) gegen das Element (4) des zweiten Körpers umfasst.

15. Verfahren nach einem der Ansprüche 12 bis 14, wobei dem Schritt i) ein Schritt eines Manövrierens des Fahrzeugs vorausgeht, welcher es dem Zubehör annähert, insbesondere bis eine Kontaktbedingung zwischen einer Fläche des zweiten Elements (3) der Vorrichtung (1) und dem Element (4) des zweiten Körpers hergestellt ist.

## Revendications

1. Dispositif d'accouplement (1) configuré pour faire fonctionner un raccordement pouvant être séparé entre un premier corps et un second corps,
dans lequel ledit premier corps est un véhicule de jardinage et/ou d'agriculture et ledit second corps est un accessoire pour ledit véhicule ou dans lequel ledit second corps est un véhicule de jardinage et/ou d'agriculture et ledit premier corps est un accessoire pour ledit véhicule, et
dans lequel ledit dispositif d'accouplement (1) comprend un premier élément (2) intégré audit premier corps ou pouvant s'appliquer audit premier corps, ledit premier élément (2) comprenant une portion de raccordement (29), une cavité (5) adaptée pour recevoir un élément externe (4) solidaire dudit second corps étant obtenue dans ladite portion de raccordement (29), la pénétration de ladite cavité (5) dans ladite portion de raccordement (29) se produisant en commençant à partir d'une section d'orifice d'entrée (7), la pénétration de ladite cavité (5) dans ledit premier élément (2) se produisant le long d'une trajectoire d'extension donnée, en particulier le long d'un axe d'extension (V) donné en commençant à partir d'une section d'orifice d'entrée (7), ladite section d'orifice d'entrée (7) présentant une largeur donnée transversalement par rapport à ladite trajectoire d'extension, en particulier orthogonalement à ladite trajectoire d'extension, ladite section d'orifice d'entrée (7) pouvant être traversée par ledit élément externe (4) afin de permettre de faire basculer la position dudit élément externe (4) entre :
- une position de désengagement, dans laquelle ledit élément externe (4) est agencé à l'extérieur de ladite cavité (5), et
- une position d'engagement, dans laquelle ledit élément externe (4) est agencé à l'intérieur de ladite cavité (5),
**caractérisé en ce que** ledit dispositif d'accouplement (1) comprend en outre un second élément (3), ledit second élément (3) comprenant une portion fonctionnelle (28), ladite portion fonctionnelle (28) étant mobile par rotation et/ou par translation par rapport à la portion de raccordement (29) dudit premier élément (2) de manière à pouvoir sélectivement adopter :
- au moins une position et/ou une orientation de travail (10), dans ladite position et/ou orientation de travail (10), ladite portion fonctionnelle (28) dudit second élément (3) entraînant une obstruction complète de ladite section d'orifice d'entrée (7) ou entraînant une obstruction de ladite section d'orifice d'entrée (7) limitée à une première fraction de la largeur de ladite section d'orifice d'entrée (7), dans ladite position et/ou orientation de travail (10) un basculement de la position dudit élément externe (4) depuis ladite position de désengagement vers ladite position d'engagement et/ou un basculement depuis ladite position d'engagement vers ladite position de désengagement étant empêché, et
- au moins une position et/ou orientation de repos (11), dans ladite position et/ou orientation de repos (11) ladite portion fonctionnelle (28) dudit second élément (3) n'entraînant aucune obstruction de ladite section d'orifice d'entrée (7) ou entraînant une obstruction de ladite section d'orifice d'entrée (7) limitée à une seconde fraction de la largeur de ladite section d'orifice d'entrée (7), ladite seconde fraction étant plus petite que ladite première fraction, dans ladite position et/ou orientation de repos (11) un basculement de la position dudit élément externe (4) depuis ladite position de désengagement vers ladite position d'engagement et/ou un basculement depuis ladite position d'engagement vers ladite position de désengagement étant permis.

2. Dispositif (1) selon la revendication 1, dans lequel ladite cavité (5) est définie par deux parois opposées et une paroi d'extrémité (8), lesdites parois opposées s'étendant en particulier selon un parallélisme idéal et/ou une symétrie idéale par rapport à ladite trajectoire d'extension, ladite paroi d'extrémité (8) s'étendant en particulier de manière continue entre lesdites parois opposées,
éventuellement dans lequel lesdites parois opposées sont adaptées pour agir comme parois de guidage pour ledit élément externe (4) durant un basculement dans la position dudit élément externe (4) depuis ladite position de désengagement vers ladite position d'engagement et/ou depuis ladite position d'engagement vers ladite position de désengagement et/ou dans lequel ladite paroi d'extrémité (8) est adaptée pour agir comme paroi de butée pour ledit élément externe (4) dans ladite position d'engagement, dans lequel lesdites parois opposées peuvent s'étendre sur une longueur sensiblement identique ou sur une longueur différente l'une de l'autre, et/ou
éventuellement dans lequel ladite cavité (5) présente un profil convergent, moyennant quoi la distance entre lesdites parois opposées adjacentes à ladite section d'orifice d'entrée (7) est supérieure à la distance entre lesdites parois opposées adjacentes à ladite paroi d'extrémité (8) et/ou
éventuellement dans lequel ladite paroi d'extrémité (8) est intégralement incurvée ou comprend au moins une section incurvée, en particulier au moins une section circonférentielle en arc, ou présente un profil polygonal.

3. Dispositif (1) selon l'une quelconque des revendications précédentes, dans lequel la portion fonctionnelle (28) dudit second élément (3) présente une surface de poussée (14) faisant face vers l'intérieur de ladite cavité (5), ladite surface de poussée (14) étant mise en forme pour exercer, dans ladite position et/ou orientation de travail (10), une pression sur ledit élément externe (4) lorsqu'il se trouve dans ladite position d'engagement, ladite pression étant en particulier suffisante pour stabiliser ladite position d'engagement dudit élément externe (4), la pression exercée par ladite surface de poussée (14) sur ledit élément externe (4) poussant ledit élément externe (4) pour venir en butée contre la paroi d'extrémité (8) de ladite cavité (5),
éventuellement dans lequel ladite surface de poussée (14) est mise en forme afin de permettre un basculement intentionnel de la position et/ou de l'orientation de la portion fonctionnelle (28) dudit second élément (3) depuis ladite position et/ou orientation de travail (10) vers ladite position et/ou orientation de repos (11) lorsque ledit élément externe (4) se trouve dans ladite position d'engagement, en particulier aux fins d'un basculement ultérieur dudit élément externe (4) dans ladite position de désengagement, et/ou
éventuellement dans lequel la portion fonctionnelle (28) dudit second élément (3) présente en outre une surface frontale (15) faisant face vers l'extérieur et/ou étant opposée à ladite surface de poussée (14), ladite surface frontale (15) étant configurée pour permettre audit élément externe (4) d'exercer une pression capable d'entraîner un basculement de la position et/ou de l'orientation de ladite portion fonctionnelle (28) depuis ladite position et/ou orientation de travail (10) vers ladite position et/ou orientation de repos (11), en particulier un basculement temporaire vers ladite position et/ou orientation de repos (11) convenant pour établir ladite position d'engagement dudit élément externe (4) en commençant à partir de ladite position de désengagement.

4. Dispositif (1) selon l'une quelconque des revendications précédentes, comprenant en outre une goupille (12), ladite goupille (12) étant un composant dudit dispositif (1) qui est distinct dudit premier élément (2) et dudit second élément (3) ou un composant dudit dispositif (1) intégré audit premier élément (2) ou audit second élément (3), dans lequel ledit premier élément (2) est lié audit second élément (3) à l'aide de ladite goupille (12), ladite goupille (12) permettant audit second élément (3) de tourner par rapport audit premier élément (2) et/ou d'effectuer une translation par rapport audit premier élément (2), afin de basculer la position et/ou l'orientation de la portion fonctionnelle (28) dudit second élément (3) entre ladite position et/ou orientation de travail (10) et ladite position et/ou orientation de repos (11), éventuellement dans lequel ledit élément externe (4) présente une forme axialement symétrique, en particulier une forme cylindrique, et dans lequel ledit dispositif (1) est configuré pour permettre audit élément externe (4), lorsque ledit élément externe (4) se trouve dans ladite position d'engagement et/ou lorsque la portion fonctionnelle (28) dudit second élément (3) se trouve dans ladite position et/ou orientation de travail (10), de tourner autour d'un axe de celui-ci et/ou d'effectuer une translation le long d'un axe de celui-ci ou ledit dispositif (1) est configuré pour empêcher ledit élément externe (4), lorsque ledit élément externe (4) se trouve dans ladite position d'engagement et/ou lorsque la portion fonctionnelle dudit second élément (3) se trouve dans ladite position et/ou orientation de travail (10), de tourner autour de l'axe de celui-ci et/ou d'effectuer une translation le long d'un axe de celui-ci,
éventuellement dans lequel ledit premier élément (2) et ledit second élément (3) comprennent en particulier un siège de logement respectif de ladite goupille (12), dans lequel ledit second élément (3) est mobile par rotation par rapport audit premier élément (2), une rotation relative dudit second élément (3) dans une première direction entraînant un basculement de ladite portion fonctionnelle (28) depuis ladite position et/ou orientation de travail (10) vers ladite position et/ou orientation de repos (11), une rotation relative dudit second élément (3) dans une seconde direction opposée à ladite première direction entraînant un basculement de ladite portion fonctionnelle (28) depuis ladite position et/ou orientation de repos (11) vers ladite position et/ou orientation de travail (10).

5. Dispositif (1) selon l'une quelconque des revendications précédentes, comprenant en outre un élément élastique, préférablement un ressort (16), dans lequel ledit élément élastique est agencé, effectuant un raccordement entre une portion d'ancrage (45) dudit premier élément (2) et une portion de fixation (23) dudit second élément (3), ladite portion d'ancrage (45) étant en particulier distincte de ladite portion de raccordement (29) et/ou ladite portion de fixation (23) se trouvant en particulier distincte de ladite portion fonctionnelle (28), dans lequel ledit élément élastique est configuré pour agir contre des mouvements de la portion fonctionnelle (28) dudit second élément (3) visant à établir ladite position de repos et/ou ladite orientation de repos (11) en commençant à partir de ladite position et/ou orientation de travail (10), en particulier afin de stabiliser ladite position et/ou orientation de travail (10) de ladite portion fonctionnelle (28) en l'absence d'actions externes exercées sur ledit second élément (3),
éventuellement dans lequel ledit second élément (3) comprend en outre une portion d'entraînement (25) configurée pour permettre l'exercice d'une action externe capable de surmonter l'action antagoniste dudit élément élastique et d'entraîner un basculement de la position et/ou de l'orientation de ladite portion fonctionnelle (28) depuis ladite position et/ou orientation de travail (10) vers ladite position et/ou orientation de repos (11), en particulier un basculement temporaire vers ladite position et/ou orientation de repos (11) convenant pour établir ladite position de désengagement dudit élément externe (4) à partir de ladite position d'engagement,
en particulier dans lequel ledit second élément (3) comprend un premier lobe, un second lobe et un troisième lobe, ledit premier lobe intégrant ladite portion fonctionnelle (28), ledit second lobe intégrant ladite portion de fixation (23) et ledit troisième lobe intégrant ladite portion d'entraînement (25), et dans lequel ledit premier lobe, ledit second lobe et ledit troisième lobe sont angulairement décalés les uns par rapport aux autres.

6. Dispositif (1) selon l'une quelconque des revendications précédentes, dans lequel ledit dispositif (1) comprend en outre un élément de verrouillage, ledit élément de verrouillage en particulier comprenant au moins une plaque élastique en particulier fixée audit premier élément (2), ledit élément de verrouillage pouvant manuellement ou automatiquement basculer entre :
- une position inefficace, dans laquelle ledit élément de verrouillage ne coopère pas avec ledit second élément (3), et
- une position efficace, dans laquelle ledit élément de verrouillage coopère avec ledit second élément (3) afin de verrouiller ledit second élément (3) en particulier lorsque la portion fonctionnelle (28) dudit second élément (3) se trouve dans ladite position et/ou orientation de repos (11),
éventuellement dans lequel une ouverture (P0) est obtenue dans ledit second élément (3) et une ouverture auxiliaire (P1) est obtenue dans ledit premier élément (2), en particulier dans des positions telles que ladite ouverture (P0) et ladite ouverture auxiliaire (P1) sont au moins partiellement superposées l'une à l'autre lorsque la portion fonctionnelle (28) dudit second élément (3) se trouve dans ladite position et/ou orientation de repos (11), dans ladite position efficace ledit élément de verrouillage étant inséré dans ladite ouverture (P0) et dans ladite ouverture auxiliaire (P1) ou
éventuellement dans lequel une ouverture (P) est obtenue dans ledit second élément (3), en particulier dans une position telle que ladite ouverture (P) n'est pas superposée audit premier élément (2) lorsque la portion fonctionnelle (28) dudit second élément (3) se trouve dans ladite position et/ou orientation de repos (11), dans ladite position efficace ledit élément de verrouillage étant inséré dans ladite ouverture (P).

7. Dispositif (1) selon l'une quelconque des revendications précédentes, dans lequel ledit dispositif (1) comprend un moyen de forcer un basculement provisoire de la position et/ou de l'orientation de la portion fonctionnelle (28) dudit second élément (3) dans ladite position et/ou orientation de repos (11), comprenant :
a) une extrémité dudit second élément (3) et/ou
b) un levier fonctionnellement raccordé audit second élément (3) et/ou
c) un câble fonctionnellement raccordé audit second élément (3) et/ou
d) un élément actionnable au pied, fonctionnellement raccordé audit second élément (3) et/ou
dans lequel ledit dispositif (1) comprend un moyen de stabiliser ladite position et/ou orientation de repos (11) de la portion fonctionnelle (28) dudit second élément (3), comprenant :
a) une goupille passant à travers ledit premier élément (2) et ledit second élément (3) et/ou
b) un entraînement latéral fixé dans ledit premier élément (2) avec la possibilité d'accouplement dans ledit second élément (3) et/ou
c) un verrou mécanique ou électrique qui permet le verrouillage et le déverrouillage dudit second élément (3) et/ou
d) une vis de blocage à bille fixée dans ledit premier élément (2) et en contact avec ledit second élément (3).

8. Dispositif (1) selon l'une quelconque des revendications précédentes, dans lequel, dans ladite position et/ou orientation de travail (10), ladite portion fonctionnelle (28) dudit second élément (3) entraîne une obstruction de ladite section d'orifice d'entrée (7) comprise entre un quart et trois quarts de la largeur de ladite section d'orifice d'entrée (7) et/ou
dans lequel, dans ladite position et/ou orientation de repos (11), ladite portion fonctionnelle (28) dudit second élément (3) entraîne une obstruction de ladite section d'orifice d'entrée (7) qui est inférieure à un quart de la largeur de ladite section d'orifice d'entrée (7).

9. Dispositif (1) selon l'une quelconque des revendications précédentes, dans lequel ledit premier élément (2) définit un siège (57) et dans lequel ledit second élément (3) est logé dans ledit siège (57) au moins pour une fraction prépondérante de son extension, en particulier dans lequel ledit premier élément (2) et ledit second élément (3) sont idéalement symétriques par rapport à un plan commun de symétrie (S) et/ou
dans lequel ledit premier élément (2) est constitué de matériau métallique, en particulier d'acier, et/ou dans lequel ledit second élément (3) est constitué de matériau métallique, en particulier d'acier et/ou
dans lequel, durant l'utilisation, ladite trajectoire d'extension, en particulier ledit axe d'extension (V), est un axe idéalement horizontal et/ou dans lequel, durant l'utilisation, le centre géométrique de gravité dudit second élément (3) est localisé au-dessus de ladite cavité (5).

10. Système (9) comprenant au moins :
a) un premier corps et
b) un second corps,
dans lequel ledit premier corps est pourvu d'au moins un dispositif d'accouplement (1) selon l'une quelconque des revendications 1 à 9 et dans lequel ledit dispositif d'accouplement (1) est raccordé, en particulier de manière séparable, à un élément (4) dudit second corps ou est configuré pour être raccordé, en particulier de manière séparable, à un élément (4) dudit second corps,
éventuellement dans lequel ledit premier corps est pourvu d'une pluralité de dispositifs d'accouplement (1), en particulier de deux à cinq dispositifs d'accouplement (1), chaque dispositif d'accouplement (1) de ladite pluralité étant selon l'une quelconque des revendications 1 à 9, l'agencement desdits dispositifs d'accouplement (1) sur ledit premier corps étant en particulier tel qu'il définit un plan de symétrie, dans lequel les dispositifs d'accouplement (1) de ladite pluralité sont raccordés, en particulier de manière séparable, à un ou plusieurs éléments (4) dudit second corps ou sont configurés pour être raccordés, en particulier de manière séparable, à un ou plusieurs éléments (4) dudit second corps.

11. Système (9) selon la revendication 10, dans lequel ledit second corps est un tracteur tondeuse (77) et ledit premier corps est un plateau de coupe (85) en particulier du type avant, et/ou
dans lequel ledit élément dudit second corps est un axe de roue, en particulier un axe de roue avant, ou est un arbre stationnaire (54) sensiblement coaxial vis-à-vis d'un axe de roue, en particulier un axe de roue avant, dudit second corps et/ou dans lequel ledit premier élément (2) dudit dispositif d'accouplement (1) comprend une portion de montage (18), en particulier opposée à ladite portion de raccordement (29), ladite portion de montage (18) étant configurée pour permettre l'assemblage dudit dispositif d'accouplement (1) à un élément dudit premier corps, ledit assemblage étant en particulier exécuté à l'aide de raccordements à vis et/ou d'interverrouillage mécanique.

12. Procédé de fonctionnement d'un raccordement pouvant être séparé entre un premier corps et un second corps,
dans lequel ledit premier corps comprend un véhicule d'entretien de terrain et ledit second corps comprend un accessoire pour ledit véhicule ou ledit second corps comprend un véhicule d'entretien de terrain et ledit premier corps comprend un accessoire pour ledit véhicule, et
dans lequel ledit premier corps est pourvu d'au moins un dispositif d'accouplement (1) selon l'une quelconque des revendications 1 à 9, ledit second corps comprenant un élément (4), en particulier dans ladite position de désengagement par rapport audit dispositif (1), dans lequel ledit procédé comprend au moins les étapes consistant à :
i) établir ladite position et/ou orientation de repos (11) de la portion fonctionnelle (28) du second élément (3) dudit dispositif (1),
ii) recevoir ledit élément (4) dudit second corps dans la cavité (5) du premier élément (2) dudit dispositif (1), en particulier afin d'établir ladite position d'engagement dudit élément (4) dudit second corps par rapport audit dispositif (1) et
iii) faire basculer la position et/ou l'orientation de la portion fonctionnelle (28) du second élément (3) dudit dispositif (1) depuis ladite position et/ou orientation de repos (11) vers ladite position et/ou orientation de travail (10).

13. Procédé selon la revendication 12, dans lequel ladite étape i) comprend l'étape consistant à entraîner un basculement provisoire de la position et/ou de l'orientation de la portion fonctionnelle (28) du second élément (3) dudit dispositif (1) depuis ladite position et/ou orientation de travail (10) vers ladite position et/ou orientation de repos (11), en particulier à l'aide d'une pression exercée par ledit élément (4) dudit second corps sur une surface du second élément (3) dudit dispositif (1).

14. Procédé selon la revendication 12 ou la revendication 13, dans lequel ladite étape iii) comprend l'étape consistant à exercer une pression d'une surface du second élément (3) dudit dispositif (1) contre ledit élément (4) dudit second corps.

15. Procédé selon l'une quelconque des revendications 12 à 14, dans lequel ladite étape i) est précédée par une étape consistant à manœuvrer ledit véhicule en approchant ledit accessoire, en particulier jusqu'à ce qu'un état de contact soit établi entre une surface du second élément (3) dudit dispositif (1) et ledit élément (4) dudit second corps.
